# EUROPÄISCHE PATENTSCHRIFT

(11) **EP 0 503 281 B1**
(45) Veröffentlichungstag und Bekanntmachung des Hinweises auf die Patenterteilung: **03.04.1996**
(21) Anmeldenummer: 92102143.2
(22) Anmeldetag: 08.02.1992
(51) Int. Cl.: B65G 53/56

(54) **Rohrweiche für pneumatisch zu fördernde Schüttgüter**
Pipe switch for pneumatically conveyed bulk materials
Aiguillage tubulaire pour matières en vrac transportées par voie pneumatique

(30) Priorität: 15.03.1991 DE 4108529
(43) Veröffentlichungstag der Anmeldung: 16.09.1992
(73) Patentinhaber: MOTAN VERFAHRENSTECHNIK GMBH & CO., D-88250 Weingarten (DE)
(72) Erfinder: Heep, Dieter, D-7961 Bergatreute (DE); Isopp, Gottfried, D-7982 Baindt (DE); Puppitz, Willi, D-7981 Obereschach (DE)
(74) Vertreter: Riebling, Peter, Dr.-Ing., Patentanwalt

(56) Entgegenhaltungen:
- EP-A- 0 175 531
- EP-A- 0 462 501
- DE-A- 3 730 419
- DE-U- 8 814 109

## Beschreibung

Die Erfindung betrifft eine Rohrweiche für pneumatisch zu fördernde Schüttgüter, mit den im Oberbegriff des Anspruchs 1 im einzelnen angegebenen Merkmalen.

Derartige Weichen sind aus den DE 37 30 419 A1 und GM 11639, aus DE 38 17 349, DE 39 11 424 A1 und aus den Anmeldungen des Anmelders P 40 09 218.6 und P 41 02 008.1 bekannt und dienen alle dem gleichen Zweck, dem Sammeln oder Verteilen von Schüttgut innerhalb eines pneumatischen Rohrleitungssystems.

Bei näherer Betrachtung fällt auf, daß ein wesentlicher Bestandteil der Verfahrenstechnik die Abdichtung zwischem dem drehenden Innenteil bzw. dem Läufer und dem Gehäuse bzw. dem Stator, speziell an den Rohrein- und -ausgängen, darstellt. Egal, ob die Lösung der Dichtaufgabe durch statische oder druckunterstützte Dichtungsprofile erfolgt, so sind entweder um die Rohrabgänge im Gehäuse oder um das Rohr des inneren Drehteils Nuten zur Aufnahme der Dichtungen erforderlich, die im Falle der Gehäuselösung mit Sondermaschinen gefräst werden müssen. Je nach metallischem Werkstoff sind erhebliche Fräszeiten erforderlich, Fräserabnutzungen führen insbesondere bei statischen Dichtungen zu Undichtigkeiten bei Betrieb der Weiche. Bei aufblasbaren Dichtungen neigt die Lösung bei schlechter Abstimmung von Antriebssteuerventil und Dichtungssteuerventil zum Zerschneiden der Dichtung, wenn Rohrkante und Nutkante bei einem üblichen Abstand von 1mm die noch nicht vollentlüftete Dichtung beim Verstellen einklemmt.

Um dies auszuschließen, ist der pneumatische oder elektrische Steuerungsaufwand erheblich.

Außerdem kommt hinzu, daß die Herstellung bzw. Vulkanisation von aufblasbaren Dichtringen, sieht man von Silikon mit 24-stündiger Aushärtezeit ab, äußerst schwierig ist, da die Kleber im Laufe der Betriebszeit durch Weichmacherdiffusion zur Versprödung neigen und reißen. Bei kleinen Profildurchmessern macht auch das Anbringen von Luftanschlußnippeln enorme Schwierigkeiten.

Eine Vorrichtung zur Seitenentleerung einer pneumatischen Förderrinne, welche im weitesten Sinne auch als Rohrweiche bezeichnet werden kann, zeigt das deutsche Gebrauchsmuster DE-U-88 14 109, wobei diese Vorrichtung dazu verwendet wird, den Materialstrom einer pneumatischen Förderrinne ganz oder teilweise in eine von der Hauptförderrichtung abweichende Richtung abzuzweigen.

Hier wird das Dichtungsproblem zwischen dem Gehäuse und dem Drehkörper dadurch gelöst, daß im Bereich des gesamten Umfangs, mit Ausnahme der Ein- und Auslaßöffnungen, ein Dichtungsmaterial vorgesehen ist, welches aus bekannten Materialien, wie z.B. Hartfilzplatten, Hartgummi oder Kunststoff besteht. Hierbei ergibt sich wieder das Problem, den Drehkörper oder das Gehäuse so vorzubereiten, daß dieser das Dichtungsmaterial aufnehmen kann.

Der Herstellungsaufwand bekannter Rohrweichen war also außerordentlich hoch, weil stets der aus Metallmaterial bestehende Läufer in aufwendigen Arbeitsgängen bearbeitet werden musste.

Der vorliegenden Erfindung liegt deshalb die Aufgabe zugrunde, eine Rohrweiche der eingangs genannten Art so herzustellen, daß bei verbesserten oder mindestens gleichbleibender Dichtwirkung die Herstellungskosten wesentlich herabgesetzt werden.

Zur Lösung der gestellten Aufgabe dient die im Anspruch 1 wiedergegebene technische Lehre.

Vorteil der vorliegenden Erfindung ist also, daß auf Anbringen von Nuten im Gehäuse oder Läufer verzichtet werden kann, daß die Klebestellen der aufblasbaren Dichtungen nicht mehr dichtgeklebt werden bzw. die Belastung des Dichtdrucks ausgehalten werden muß, daß auch bei kleinen Profilen der Luftanschluß problemlos vorgenommen werden kann und daß auf ein separates Dichtungssteuerventil mit elektrischer Druckluftüberwachung verzichtet werden kann. Zur Kostenersparnis entfällt so auch die Rundbearbeitung des beweglichen Innenteils.

Bevorzugte Ausbildungen der vorliegenden Erfindung sind in der abhängigen Ansprüchen gekennzeichnet.

Für die Ausbildung der volumenvergrößerbaren Dichtungselemente gibt es mehrere verschiedene Ausführungsformen, die sämtliche als erfindungswesentlich beansprucht werden.

In einer ersten bevorzugten Ausführungsform ist es vorgesehen, daß in das Kunststoffmaterial eingebettet Schläuche vorhanden sind, welche Schläuche aus einem elastisch aufblasbaren Material bestehen. Derartige Schläuche sind z.B. Gummi- oder Silikonschläuche.

Hierbei wird es bevorzugt, wenn jeder Rohrstutzen am Läufer ringförmig von einem derartigen Schlauch umgeben wird und dieser Schlauch über entsprechende Schlauchstücke an ein Druckluftnetz angeschlossen werden kann. Durch das Einbringen von Druckluft in diesen Schlauch wird der Schlauch somit in seinem Volumen vergrößert, wobei bevorzugt ein Aufblasdruck von etwa 2 bar größer als der Förderdruck verwendet wird. Bei einem Förderdruck von z.B. 3 bar wird also ein Aufblasdruck von 5 bar für das Aufblasen des Dichtungsschlauches verwendet. Mit der elastischen Volumenvergrößerung des Dichtungsschlauches wird diese Volumenvergrößerung gleichzeitig dem Kunststoffmaterial mitgeteilt, welches den Schlauch an allen Seiten umgibt, so daß sich das Kunststoffmaterial radial auswärts ausdehnt in dem Bereich, wo der Schlauch im Kunststoffmaterial eingebettet ist.

Nachdem sich der Kunststoffmantel bevorzugt auf einem metallischen Innenmantel des Läufers abstützt, kommt es also zu einer radial auswärts gerichteten Verformung des Kunststoffmantels.

Um eine derartige Verformung noch zu verstärken, ist es vorgesehen, daß unterschiedlich harte Kunststoffmaterialien den Mantel des Läufers bilden.
Hierbei wird der Läufer in verschiedene Gießzonen eingeteilt, wobei die Gießzonen voneinander durch entsprechende metallische Stege getrennt sind, so daß in einem ersten Arbeitsgang z.B. ein härteres Kunststoffmaterial für den Läufer verwendet wird, an den Stellen, wo eine Dichtungsfunktion nicht vorgesehen ist und ein weicheres Kunststoffmaterial im Umgebungsbereich der Rohrstutzen verwendet wird, dort wo eine Dichtungswirkung erwünscht ist.

Wenn die aufblasbaren Schläuche also in diesem weicheren Kunststoffmaterial eingebettet werden, dann kann sich dieses weichere Kunststoffmaterial noch besser radial auswärts verformen.

Es sind zwar derartige aufblasbare Dichtungen bekannt, aber nur in der Ausführung, daß aufblasbare Schläuche in Nuten eines Metallmaterials eingelegt sind. Es wurde bereits schon in der Beschreibungseinleitung darauf hingewiesen, daß damit ein unverhältnismässig hoher Bearbeitungsaufwand verbunden ist, um diese Nuten in dem sphärischen Mantel des Läufers anzubringen.

Außerdem bestand der weitere Nachteil, daß die Schläuche in den bekannten, offenen Metallnuten mit außerordentlich hoher Präzision dicht verklebt werden mussten, denn bei längerer Betriebsdauer neigten die Vulkanisationsstellen der Schläuche zum Auflösen und damit wurden die Schläuche undicht.

Dieses Problem kann auf sehr einfache Weise mit der vorliegenden Erfindung beherrscht werden, denn nachdem die Schläuche in dem Kunststoffmaterial allseitig eingebettet sind, können Undichtigkeiten der Schläuche nicht mehr zu einem Druckverlust führen, denn die Dichtungswirkung wird nach wie vor aufrechterhalten.

Dies kann sogar soweit führen, daß man überhaupt auf Schläuche verzichtet und nur leere Kanäle in der Gießform einbringt. Ein derartiger leerer Kanal kann z.B. als verlorene Gußform in Form eines Wachsstranges erfolgen, wobei dieser Wachsstrang in die Gußform eingelegt wird und von dem Kunststoff ummantelt wird. Bei Erhitzen des Kunststoffmaterials fließt das Wachs heraus, und es bleibt ein Kanal übrig, der leicht an eine Druckquelle angeschlossen werden kann.

Selbstverständlich wird es von der vorliegenden Erfindung auch umfasst, daß halboffene Nuten in dem weichen Kunststoffmaterial angebracht werden. Jedoch werden erfindungsgemäss diese halboffenen Nuten nicht durch den vorher als nachteilig beschriebenen Fräsvorgang eingebracht, sondern diese Nuten können auf einfache Weise durch Einbringen von Kernen in der Gußform eingeformt werden, wobei in der Gußform entsprechende Metallkerne vorhanden sind, die beim Ausgießen mit dem Kunststoffmaterial dann halboffene Nuten im Kunststoffmaterial zurücklassen und in diese halboffenen Nuten können aufblasbare Schläuche eingesetzt werden.

Es wird nochmals darauf hingewiesen, daß in der vorherstehenden Beschreibung und in der nachfolgenden Beschreibung aus Vereinfachungsgründen nur ein Ausführungsbeispiel beschrieben wird, nämlich ein Läufer, dessen Außenumfang als Kunststoffmantel ausgebildet ist. Von der vorliegenden Erfindung wird aber auch die kinematische Umkehrung erfasst, daß nämlich der Innenumfang des Stators mit einem derartigen Kunststoffmantel versehen ist und daß wahlweise in diesen Kunststoffmantel die vorher beschriebenen Dichtungselemente angeordnet werden können.

Nachdem es bei der vorliegenden Erfindung um volumenvergrößerbare Dichtungselemente geht, sind vom Rahmen der vorliegenden Erfindung noch andere Dichtungselemente umfasst, die ebenfalls eine Volumenvergrößerung erzielen.

Eine wichtige weitere Ausgestaltung der vorliegenden Erfindung sieht vor, daß statt der volumenausdehnbaren Schläuche ein volumenausdehnbares Kunststoffmaterial verwendet wird, welches z.B. durch gezielte Erhitzung das Volumen vergrößert und dann ebenfalls eine Volumenvergrößerung erzielt, wie es vorher bei dem Schlauch beschrieben wurde. Ein derartiges Kunststoffmaterial kann z.B. elektrisch oder durch ein Fließmediumvolumen ausdehnbar gestaltet werden. Ebenso ist es möglich, die Volumenausdehnung eines derartigen Kunststoffmaterials durch stromdurchflossene Pelteir-Elemente zu erreichen; bei Stromdurchfluß der Pelteir-Elemente in der einen Richtung würde dann das Kunststoffmaterial erhitzt und würde sein Volumen ausdehnen, während beim Stromdurchfluß der Pelteir-Elemente in ihrer entgegengesetzten Richtung diese Pelteir-Elemente abkühlen und das Kunststoffmaterial sich somit zusammenzieht und die Dichtungswirkung damit aufgehoben wird.

Wichtig bei allen volumenausdehnbaren Dichtungen ist, daß die Volumenausdehnung immer dann erzeugt werden soll, wenn der Läufer dem Stator gegenübersteht, ohne daß eine Relativbewegung zwischen den beiden Teilen vorliegt. Sobald der Läufer in Bezug zum Stator verdreht werden soll, soll die volumenausdehnbare Dichtung ihr Volumen vermindern, so daß in diesem Dichtungsbereich ein Körperkontakt zwischen den Flächen des Läufers und des Stators vermieden wird.

Eine weitere Ausgestaltung einer volumenausdehnbaren Dichtung ist z.B. die Einbettung von stromdurchflossenen Permanent-Magneten, die sich abstossen, so daß durch die Abstosswirkung der Permanentmagnete ebenfalls eine radial auswärts gerichtete Verformung des Kunststoffmantels erzeugt wird.

Im folgenden wird die Erfindung anhand von lediglich einen Ausführungsweg darstellende Zeichnungen näher erläutert.

Es zeigen:
- Figur 1:: der Läufer nach der Erfindung im Teilschnitt,
- Figur 2:: ein Teilschnitt durch einen Läufer mit gegenüberliegendem Stator mit Schnitt durch den Durchflußbereich,
- Figur 3:: Schnitt gemäss der Linie III-III in Figur 2,
- Figur 4:: Schnitt gemäss der Linie IV-IV in Figur 1,
- Figur 5:: eine gegenüber Figur 2 abgewandelte Ausführung, wo der Kunststoffmantel im Stator angeordnet ist,
- Figur 6:: Schnitt gemäss der Linie VI-VI in Figur 5,
- Figur 7:: eine weitere Abwandlung, wo der Kunststoffmantel in einem Zwischenteil zwischen dem Läufer und dem Stator angeordnet ist.

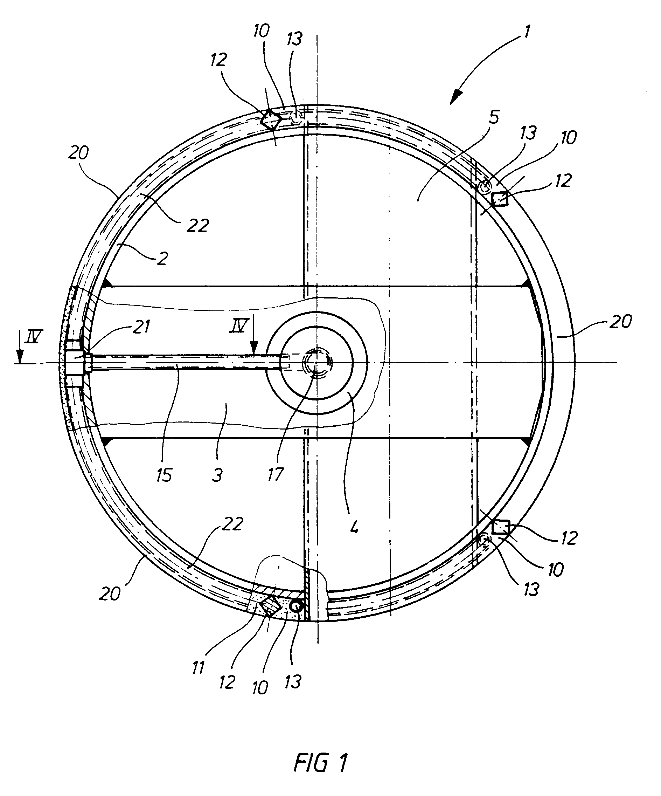

Gemäss Figur 1 besteht der Läufer 1 nach der vorliegenden Erfindung aus einem im wesentlichen rotationssymmetrischen Teil, welches an seinem Innenumfang einen Metallmantel 2 aufweist. Der Metallmantel 2 ist in seinem radial äußeren Bereich von einem Kunststoffmantel 11 umgeben, wobei der Kunststoffmantel in zwei verschiedene Kunststoffmaterialien unterteilt ist. Zur Gewährleistung unterschiedlicher Zusammensetzungen des Kunststoffmantels 11 ist hierbei vorgesehen, daß die verschiedenen Kunststoffzonen des Kunststoffmantels 11 durch Trennleisten 12 voneinander abgeteilt sind, wobei in einem ersten Bereich 20 ein härteres Kunststoffmaterial verwendet wird, während in einem zweiten Bereich ein weicheres Kunststoffmaterial verwendet wird, welches Dichtungszonen 10 ausbildet.

Das die Dichtungszonen 10 ausbildende Kunststoffmaterial ist relativ elastisch und kann unter Einwirkung von Druck verformt werden.

Das andere Kunststoffmaterial in den Bereichen 20 ist relativ hartelastisch und weist eine höhere Shore-Härte auf.

Die Unterteilung des Kunststoffmantels 11 des Läufers 1 in unterschiedliche Zonen mit unterschiedlichem Kunststoffmaterial hat den Vorteil, daß das weichere Kunststoffmaterial, welches die Dichtungszonen 10 ausbildet, wieder erneuert werden kann, während das härtere Kunststoffmaterial in den Bereichen 20 nicht erneuert werden braucht.

Zum Erneuern des weicheren Kunststoffmaterials, welches die Dichtungszonen 10 ausbildet, kann dieses Kunststoffmaterial leicht zwischen den Trennleisten 12 herausgeschält werden und der Läufer 1 kann dann erneut in diesen Bereichen zwischen den Trennleisten 12 mit dem weicheren Kunststoffmaterial ausgegossen werden.

Der Läufer 1 wird hierbei etwa in radialer Richtung von einem Läuferrohr 5 durchsetzt, welches von dem zu fördernden Medium durchflossen ist.

Erfindungsgemäss sind nun am Außenumfang des Läuferrohres 5 die Dichtungszonen 10 mit dem weicheren Kunststoffmaterial ausgebildet.

Hierbei ist wichtig, daß diese Dichtungszonen 10 noch zusätzlich volumenvergrößerbar in radial auswärts gerichteter Richtung sind durch entsprechende Schläuche 13, welche den Außenumfang des Läuferrohres 5 jeweils vollumfänglich umfassen und die unter Druck 13 ihr Volumen vergrößern können.

Sobald also Luftdruck auf die Schläuche 13 gegeben wird, verformt sich der weichere Kunststoffmantel im Bereich der Dichtungszonen 10 radial auswärts und hierdurch werden also Dichtungszonen 10 geschaffen, die in idealer Weise an den zugeordneten Innenflächen des Stators 18 anliegen.

Der Läufer 1 weist im übrigen noch eine zentrische Achse 4 auf, von der radiale Speichen 3 ausgehen, welche den Metallmantel 2 mit der Achse 4 verbinden.

In die Achse 4 ist ein Anschluß 17 gelegt, über den Luftdruck über ein Rohr 15 und ein T-Stück 21 auf ein Verbindungsrohr 22 gegeben wird. Dieses Verbindungsrohr 22 ist als Schlauch ausgebildet und ist im härteren Kunststoffmaterial im Bereich 20 eingebettet. Das Verbindungsrohr 22 mündet dann in die Schläuche 13, wobei jeder Schlauch 13 die jeweilige Stirnseite des Rohres 5 vollumfänglich umgibt und so die Dichtungszonen 10 bildet.

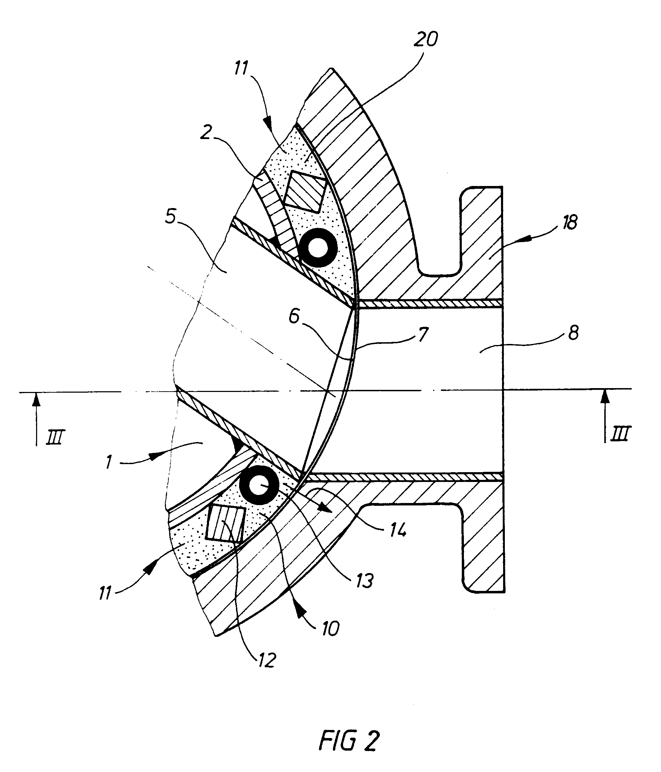

Aus Figur 2 ist erkennbar, daß der Kunststoffmantel 11 in zwei verschiedene Bereiche unterteilt ist, nämlich in den Bereich 20 mit dem härteren Kunststoffmaterial, wobei Trennleisten 12 dann das weichere Kunststoffmaterial abtrennen, welches im Zwischenraum zwischen der jeweiligen Trennleiste 12 und dem Rohrmantel des Läuferrohres 5 eingegossen ist. Im Bereich dieser Dichtungszonen 10 sind also die Schläuche 13 angeordnet.

Es ist erkennbar, daß das Läuferrohr 5 eine genau metallisch bearbeitete Stirnseite 6 aufweist, der eine zugeordnete, genau metallisch bearbeitete Stirnseite 7 des Statorrohres 8 gegenüberliegt. Die beiden Stirnseiten 6,7 liegen mit einem gegenseitigen Spiel von weniger als 0,5 mm einander gegenüber. Wichtig ist hierbei, daß zur Erreichung der Dichtungswirkung nur lediglich das Läuferrohr 5 und das zugeordnete Statorrohr 8 an ihren Stirnseiten 6,7 bearbeitet werden müssen, ohne daß hierbei - wie vorher bekannt- der gesamte Innenumfang des Stators und der zugeordnete Außenumfang des Läufers genau bearbeitet werden müssen.

Zur Erreichung einer optimalen Abdichtungswirkung dieser Stirnseiten 6,7 in den Spalt zwischen dem Läufer 1 und dem Stator 18 hinein sind also die vorher beschriebenen Dichtungszonen 10 vorgesehen, wobei im Bereich dieser Dichtungszonen die vorher beschriebenen volumenvergrößerbaren Schläuche 13 angeordnet sind.

Beim Aufblasen der Schläuche 13 verformt sich somit das Kunststoffmaterial im Bereich der Dichtungszone 10 in Pfeilrichtung 14 radial auswärt und legt sich somit an den Innenumfang des Stators 18 an.

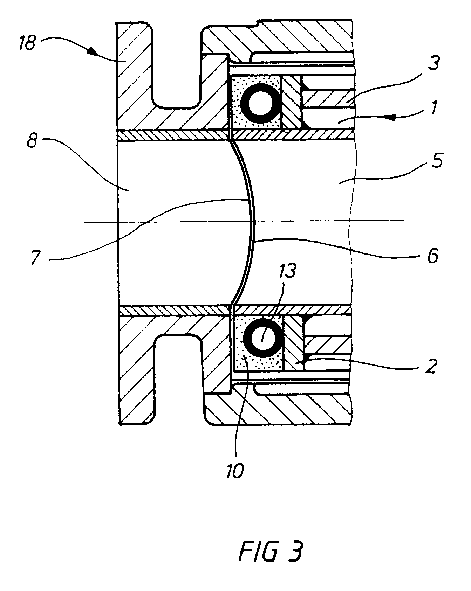

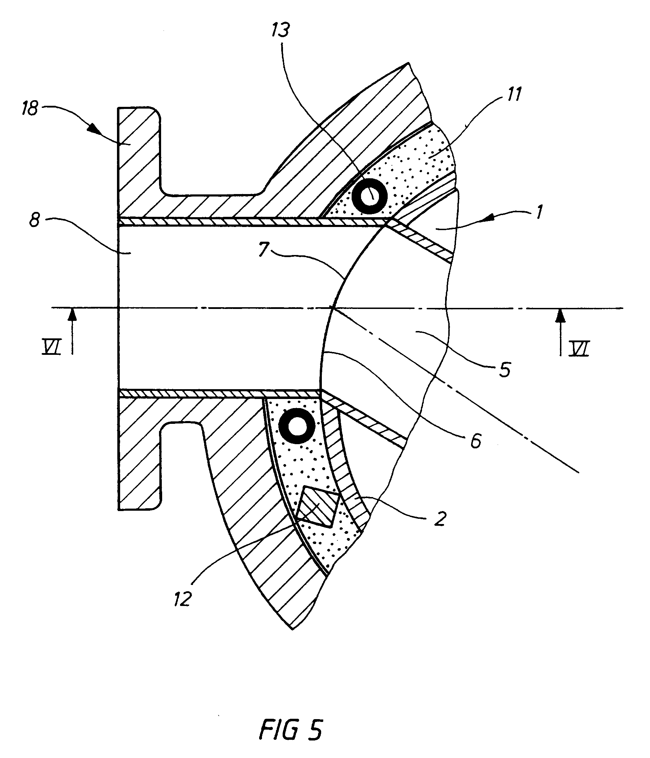

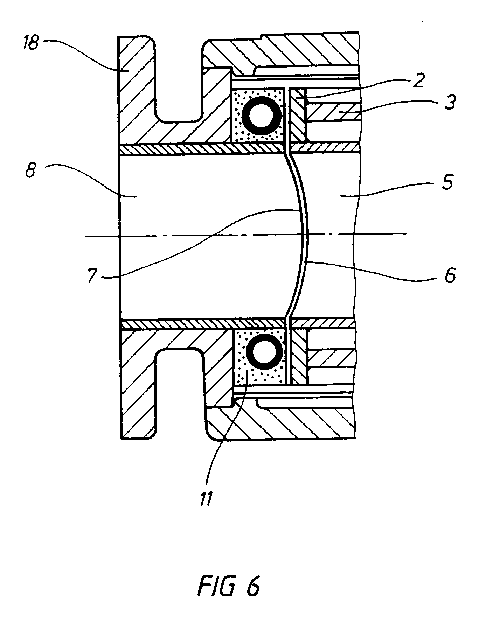

Die Figuren 5 und 6 zeigen die kinematische Umkehrung der Ausführung nach den Figuren 1 bis 4, wo erkennbar ist, daß der Kunststoffmantel 11 nun nicht mehr am Außenumfang des Läufers 1 angeordnet ist, sondern am Innenumfang des Stators 18. Hierbei sind in der gleichen - wie vorher beschriebenen - Weise Schläuche 13 in den Kunststoffmantel 11 eingelegt und bilden die vorher beschriebenen Dichtungszonen.

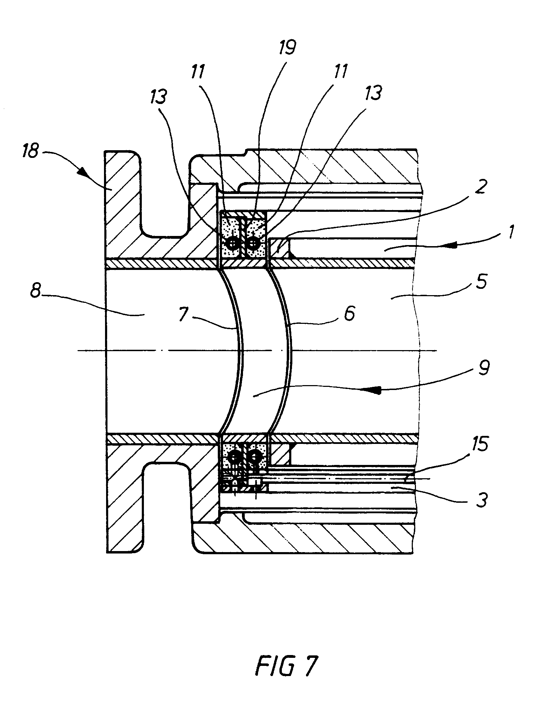

Die Figur 7 zeigt eine weitere Ausführung, wo erkennbar ist, daß der Kunststoffmantel 11 weder am Aussenumfang des Läufers noch am Innenumfang des Stators 18 angeordnet ist. Hier sind zwischen den beiden Teilen 1,18 ein Zwischenrohr 9 angeordnet, welches den Kunststoffmantel trägt. Dieses Zwischenrohr 9 ist entweder fest oder drehbar angeordnet und kann entweder fest mit dem Stator 18 verbunden sein oder fest mit dem Läufer 1. Das Zwischenrohr 9 besteht im wesentlichen aus zwei Kunststoffmänteln 11, die voneinander durch eine Trennwand 19 getrennt sind. In jedem Kunststoffmantel 11 ist in der vorher beschriebenen Weise ein Schlauch 13 eingebettet, wobei durch die Volumenvergrößerung des jeweiligen Schlauches 13 sich der eine, radial einwärts gerichtete Kunststoffmantel 11 radial einwärts verformt und so die Dichtungwirkung an dem Läufer erzielt wird, während der andere, radial auswärts gerichtete Kunststoffmantel 11 sich radial auswärts verformt und hiermit die Dichtungswirkung zwischen dem Zwischenrohr 9 und dem Innenumfang des Stators 18 erzielt wird.

Die Schläuche 13 werden wiederum durch ein gemeinsames Rohr 15 mit Druckluft versorgt.

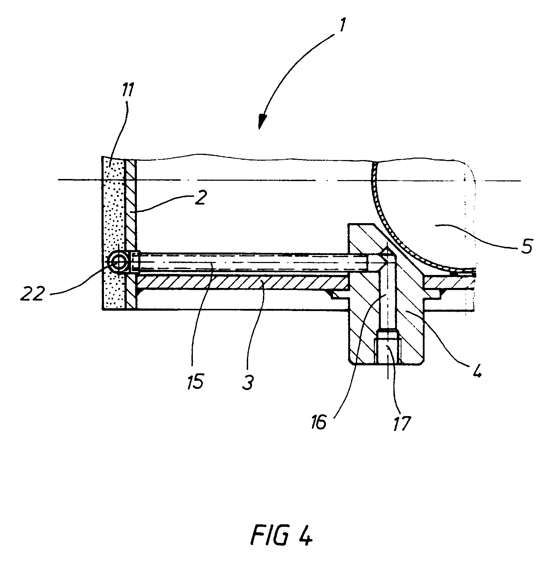

Wie in Figur 4 ist hierbei das Rohr 15 über eine Bohrung 16 mit dem in der Achse 4 liegenden Anschluß 17 luftschlüssig verbunden.

Vorstehend wurde beschrieben, daß lediglich eine Dichtungszone im Umfangsbereich des Läuferrohres 5 vorgesehen ist, wobei diese Dichtungszone durch weicheres, elastisch verformbares Kunststoffmaterial gebildet wird, in dem in geschlossenen oder offene Nuten entsprechende volumendehnbare Elemente angeordnet sind.

Es wurde ferner darauf hingewiesen, daß diese volumendehnbaren Elemente nicht notwendigerweise druckbeaufschlagbare Schläuche sein müssen, sondern es kommen auch andere Elemente in Frage, wie z.B. unter Wärmeeinfluß ausdehnbare, volumenvergrößernde Elemente oder Elemente, die unter Stromeinfluß ihr Volumen verändern.

Wichtig hierbei ist, daß derartige Dichtungszonen 10 nicht nur im Umfangsbereich um das Läuferrohr 5 herum angeordnet sein können, sondern daß auch solche Dichtungszonen in sogenannten Blindbereichen angeordnet werden können, wo es darum geht, daß ein Blindstutzen des Läufers das zugeordnete Statorrohr dichtend abdecken soll. Es können also noch Dichtungszonen im Bereich 20 des härteren Kunststoffmaterials eingebracht werden, wobei hier ebenfalls bevorzugt Trennleisten vorhanden sind, welche das weichere Kunststoffmaterial der Dichtungszone 10 von dem härteren Kunststoffmaterial des Bereiches 20 abtrennen.

### ZEICHNUNGS-LEGENDE

- 1: Läufer
- 2: Metallmantel
- 3: Speiche
- 3: Achse
- 5: Läuferrohr
- 6: Stirnseite (Läuferrohr)
- 7: Stirnseite (Statorrohr)
- 8: Statorrohr
- 9: Zwischenrohr
- 10: Dichtungszone
- 11: Kunststoffmantel
- 12: Trennleiste
- 13: Schlauch
- 14: Pfeilrichtung
- 15: Rohr
- 16: Bohrung
- 17: Anschluß
- 18: Stator
- 19: Trennwand
- 20: Bereich
- 21: T-Stück
- 22: Verbindungsrohr

## Patentansprüche

1. Rohrweiche für pneumatisch zu fördernde Schüttgüter, wobei in einen Stator mit Rohrausgängen ein Läufer mit einem Läuferrohr angeordnet ist und der Läufer (1) oder der Stator (18) einen Mantel aus Kunststoffmaterial aufweist, wobei die einen solchen Kunststoffmantel aufweisenden Teile entweder aus Vollkunststoff, oder einem Metallkunststoffverbund bestehen,
**dadurch gekennzeichnet**, daß der Kunststoffmantel radial auswärts volumenvergrößerbare Dichtungszonen (10) aufweist, die in den Kunststoffmantel eingebettet sind und den Außenumfang des Läuferrohres (5) umfassen.

2. Rohrweiche nach Anspruch 1,
**dadurch gekennzeichnet**, daß in die Dichtungszonen (10) aufblasbare Schläuche (13) eingebettet sind.

3. Rohrweiche nach Anspurch 1 oder 2,
**dadurch gekennzeichnet**, daß der Kunststoffmantel aus zwei unterschiedlichen Kunststoffmaterialien besteht, wobei in einem ersten Bereich (20) ein härteres Kunststoffmaterial und in einem die Dichtungszonen (10) am Läuferrohr (5) ausbildenden zweiten Bereich ein gegenüber dem ersten Bereich weicheres Kunststoffmaterial Anwendung findet.

4. Rohrweiche nach Anspruch 3,
**dadurch gekennzeichnet**, daß die unterschiedliche Kunststoffmaterialien aufweisenden Bereiche durch Trennleisten (12) voneinander abgeteilt sind.

5. Rohrweiche nach einem der Ansprüche 1 bis 4,
**dadurch gekennzeichnet**, daß der Läufer (1) einen Kunststoffmantel (11) mit Dichtungszonen bzw. -bereichen (10,20) aufweist, und daß diesem Läufer (1) ein metallischer Stator (18) gegenüberliegt.

6. Rohrweiche nach einem der Ansprüche 1 - 5,
**dadurch gekennzeichnet**, daß der innenseitige Mantel des Stators (13) als Kunststoffmantel ausgebildet ist, dem ein entsprechender Metallmantel des Läufers (1) gegenüberliegt.

7. Rohrweiche nach einem der Ansprüche 1 - 5,
**dadurch gekennzeichnet**, daß der Stator (18) einen Innenmantel aus Kunststoffmaterial aufweist, und daß für den Läufer (1) ein Außenmantel (11) aus Kunststoffmaterial vorgesehen ist.

8. Rohrweiche nach einem der Ansprüche 1 - 5,
**dadurch gekennzeichnet**, daß der Läufer (1) ein Läuferrohr (5) aufweist, und daß die Dichtwirkung der Kunststoffummantelung zwischen dem Läufer (1) und dem Stator (18) im Bereich des Außenumfangs des Läuferrohres (5) hergestellt wird, während stirnseitig Läufer- und Statorrohr (5,8) metallisch bearbeitet wird.

9. Rohrweiche nach einem der Ansprüche 1 - 8,
**dadurch gekennzeichnet**, daß die in die Kunststoffummantelung des Läufers (1) oder Stators (8) eingebetteten Schläuche (13) mit einer Druckquelle verbunden sind.

10. Rohrweiche nach Anspruch 1,
**dadurch gekennzeichnet**, daß in der Gußform der Ummantelung des Läufers (1) oder des Stators (18) Leerkanäle eingeformt sind, die mit einer Druckquelle in Verbindung stehen.

11. Rohrweiche nach Anspruch 1,
**dadurch gekennzeichnet**, daß in dem weicheren Kunststoffmaterial der Dichtungszone (10) des Läufers (1) oder Stators (18) halboffene Nuten eingebracht sind, in welchen aufblasbare schlauchähnliche Kanäle angeordnet sind.

12. Rohrweiche nach Anspruch 1,
**dadurch gekennzeichnet**, daß der Kunststoffmantel des Läufers (1) oder Stators (18) aus bei Erhitzung volumenausdehnbarem Material besteht, wobei elektrische Elemente oder ein fließfähiges Medium vorgesehen sind, um das Kunststoffmaterial mit Wärme zu beaufschlagen.

13. Rohrweiche nach Anspurch 12,
**dadurch gekennzeichnet**, daß die volumenausdehnung der Dichtungszone (10) erzeugt wird, sobald Läufer (1) und Stator (18) einander gegenüberliegend im Ruhezustand angeordnet sind.

14. Rohrweiche nach Anspruch 1,
**dadurch gekennzeichnet**, daß in das Kunststoffmaterial Permanentmagnete eingebettet sind, wobei über die Abstoßwirkung der Magnete eine radialauswärts gerichtete Verformung des Kunststoffmantels erzeugt wird.

## Claims

1. A pipe switch for loose materials which are to be conveyed pneumatically, in which in a stator with pipe outlets a runner is arranged with a runner pipe and the runner (1) or the stator (18) has a casing of plastic material, in which the parts having such a plastic casing consist either of complete plastic or of a metal/plastic composite,
characterised in that the plastic casing has sealing zones (10) which are able to be increased in volume radially outwards and which are embedded in the plastic casing and surround the outer circumference of the runner pipe (5).

2. A pipe switch according to Claim 1,
characterised in that inflatable tubes (13) are embedded into the sealing zones (10).

3. A pipe switch according to Claim 1 or 2,
characterised in that the plastic casing consists of two different plastic materials, in which in a first region (20) a harder plastic material is used and in a second region forming the sealing zones (10) on the runner pipe (5) a softer plastic material is used compared with the first region.

4. A pipe switch according to Claim 3,
characterised in that the regions having different plastic materials are divided from each other by separating strips (12).

5. A pipe switch according to one of Claims 1 to 4,
characterised in that the runner (1) has a plastic casing (11) with sealing zones or sealing regions (10, 20), and that a metallic stator (18) lies opposite this runner (1).

6. A pipe switch according to one of Claims 1 - 5,
characterised in that the casing of the stator (13) on the inner side is constructed as a plastic casing opposite which a corresponding metal casing of the runner (1) lies.

7. A pipe switch according to one of Claims 1 - 5,
characterised in that the stator (18) has an inner casing of plastic material, and that an outer casing (11) of plastic material is provided for the runner (1).

8. A pipe switch according to one of Claims 1 - 5,
characterised in that the runner (1) has a runner pipe (5) and that the sealing effect of the plastic sheathing between the runner (1) and the stator (18) is brought about in the region of the outer circumference of the runner pipe (5) whilst on the end face the runner and stator pipes (5, 8) are processed metallically.

9. A pipe switch according to one of Claims 1 - 8,
characterised in that the tubes (13) embedded into the plastic sheathing of the runner (1) or stator (8) are connected with a pressure source.

10. A pipe switch according to Claim 1,
characterised in that in the mould of the sheathing of the runner (1) or of the stator (18) empty channels are formed, which are connected with a pressure source.

11. A pipe switch according to Claim 1,
characterised in that in the softer plastic material of the sealing zone (10) of the runner (1) or stator (18) half-open grooves are introduced, in which inflatable tube-like channels are arranged.

12. A pipe switch according to Claim 1,
characterised in that the plastic casing of the runner (1) or stator (18) consists of material which is able to be extended in volume on heating, in which electric elements or a flowable medium are provided, in order to act upon the plastic material with heat.

13. A pipe switch according to Claim 12,
characterised in that the volume expansion of the sealing zone (10) is brought about as soon as the runner (1) and stator (18) are arranged lying opposite each other in a state of rest.

14. A pipe switch according to Claim 1,
characterised in that permanent magnets are embedded into the plastic material, in which via the repelling effect of the magnets a deformation of the plastic casing, directed radially outwards, is produced.

## Revendications

1. Aiguillage tubulaire pour matières en vrac à transporter par voie pneumatique, dans lequel un rotor comprenant un tube de rotor est disposé dans un stator pourvu de sorties de tube et le rotor (1) ou le stator (18) comporte une enveloppe en matière plastique, et dans lequel les parties comportant une telle enveloppe en matière plastique se composent soit d'une matière plastique uniquement, soit d'un composé métal-matière plastique, caractérisé en ce que l'enveloppe en matière plastique comporte, radialement à l'extérieur, des zones d'étanchéité (10) pouvant augmenter de volume qui sont noyées dans l'enveloppe en matière plastique et qui entourent la circonférence extérieure du tube de rotor (5).

2. Aiguillage tubulaire selon la revendication 1, caractérisé en ce que des tuyaux gonflables (13) sont noyés dans les zones d'étanchéité (10).

3. Aiguillage tubulaire selon la revendication 1 ou 2, caractérisé en ce que l'enveloppe en matière plastique se compose de deux matières plastiques différentes, une matière plastique dure étant utilisée dans une première zone (20) tandis qu'une matière plastique plus molle que celle de la première zone est utilisée dans une seconde zone formant les zones d'étanchéité (10) sur le tube de rotor (5).

4. Aiguillage tubulaire selon la revendication 3, caractérisé en ce que les zones comportant des matières plastiques différentes sont séparées les unes des autres par des barres de séparation (12).

5. Aiguillage tubulaire selon l'une des revendications 1 à 4, caractérisé en ce que le rotor (1) comporte une enveloppe en matière plastique (11) pourvue de zones d'étanchéité (10, 20), et en ce qu'un stator métallique (18) se trouve en face de ce rotor (1).

6. Aiguillage tubulaire selon l'une des revendications 1 à 5, caractérisé en ce que l'enveloppe intérieure du stator (13) est conçue comme une enveloppe en matière plastique en face de laquelle se trouve une enveloppe en métal correspondante du rotor (1).

7. Aiguillage selon l'une des revendications 1 à 5, caractérisé en ce que le stator (18) comporte une enveloppe intérieure en matière plastique, et en ce qu'il est prévu pour le rotor (1) une enveloppe extérieure (11) en matière plastique.

8. Aiguillage tubulaire selon l'une des revendications 1 à 5, caractérisé en ce que le rotor (1) comporte un tube de rotor (1) et en ce que l'action d'étanchéité de la gaine en matière plastique entre le rotor (1) et le stator (18) est réalisée dans la zone de la circonférence extérieure du tube de rotor (5), tandis que côté frontal, les tubes de rotor et de stator (5, 8) sont réalisés en métal.

9. Aiguillage tubulaire selon l'une des revendications 1 à 8, caractérisé en ce que les tuyaux (13) noyés dans la gaine en matière plastique du rotor (1) ou du stator (8) sont reliés à une source de pression.

10. Aiguillage tubulaire selon la revendication 1, caractérisé en ce que dans le moule de la gaine du rotor (1) ou du stator (18), on moule des conduits vides qui communiquent avec une source de pression.

11. Aiguillage selon la revendication 1, caractérisé en ce qu'on réalise dans la matière plastique plus molle de la zone d'étanchéité (10) du rotor (1) ou du stator (18) des rainures semi-ouvertes dans lesquelles on dispose des conduits gonflables semblables à des tuyaux.

12. Aiguillage selon la revendication 1, caractérisé en ce que l'enveloppe en matière plastique du rotor (1) ou du stator (18) se compose d'un matériau apte à se dilater à la chaleur, des éléments électriques ou un agent fluide étant prévus pour solliciter la matière plastique à l'aide de chaleur.

13. Aiguillage selon la revendication 12, caractérisé en ce que la dilatation de la zone d'étanchéité (10) est réalisée dès que le rotor (1) et le stator (18) sont disposés face à face en position de repos.

14. Aiguillage selon la revendication 1, caractérisé en ce que des aimants permanents sont noyés dans la matière plastique, une déformation de l'enveloppe en matière plastique dirigée radialement vers l'extérieur étant produite par l'intermédiaire de l'action de répulsion des aimants.
